# EUROPEAN PATENT APPLICATION

(11) **EP 4 703 908 A1**
(43) Date of publication of application: **04.03.2026**
(21) Application number: 25197051.3
(22) Date of filing: 20.08.2025
(51) Int. Cl.: G06F 16/36

(54) **METHOD AND SYSTEM FOR IDENTIFICATION OF PRODUCT TAXONOMY FROM PRODUCT ABBREVIATION**

(30) Priority: 29.08.2024 IN 202421065327
(71) Applicant: Tata Consultancy Services Limited, Maharashtra (IN)
(72) Inventor: Vasudevan, BAGYA LAKSHMI, 600 119 Old Mahabalipuram (IN); SARASWAT, KUNIKA, 110001 New Delhi (IN); ANAND, AMRITA, 560066 Bangalore (IN); JAIN, AKSHAT, 453112 Indore (IN); PATWARDHAN, MANASI SAMARTH, 411057 Pune (IN); PATIDAR, MAYUR, 110001 New Delhi (IN)
(74) Representative: Goddar, Heinz J.

(57) **Abstract**

The present invention generally relates to the field of taxonomy identification. Identifying product taxonomy from a product abbreviation is currently performed manually and consumes lot of time and effort. Hence, embodiments of present disclosure provide an automated method for identification of product taxonomy from product abbreviation. First, a brand name of product abbreviation is predicted using a Large Language Model (LLM) and a brand list. Then, possible expansions of the abbreviation are generated based on the brand name using acronym expansion dictionary. Among the generated possible expansions, a relevant one is identified using the LLM. Later, web scraping and web search techniques are applied on the relevant expansion to obtain associated top k matches of a supergroup, a product group and module of the predicted relevant expansion. Finally, product taxonomy is predicted based on the top k matches using a LLM augmented taxonomy classification by Retrieval Augmented Generation.

## Description

### CROSS-REFERENCE TO RELATED APPLICATIONS AND PRIORITY

The present application claims priority to Indian application no. 202421065327, filed on August 29,2024.

### TECHNICAL FIELD

The present invention generally relates to the field of taxonomy identification, and, more particularly, to a method and system for identification of product taxonomy from product abbreviation.

### BACKGROUND

E-commerce cognitive retail solutions are booming with technological advances in UI design, availability of products, efficient delivery of products etc. E-commerce websites maintain a taxonomy of products by organizing products into categories and sub-categories to create a hierarchical structure. This structure helps users find the items they're looking for quickly and easily. Product taxonomy is also known as product classification, or product categorization. Product taxonomies are also useful in retail stores to get the right category of the products while billing, for store replenishment and so on. In some scenarios, only product abbreviations or acronyms will be available. For example, scanning a price tag or a barcode on a product gives product details fetched from a database where product details may be stored as abbreviations due to storage constraints. Receipts or bills a customer gets in a supermarket or a retail store may only have product abbreviations, but the customer would like to know the product name to check its price. In such scenarios, product taxonomy needs to be identified to rightly classify the product. Currently, an expert identifies product taxonomy from abbreviation based on his/her business understanding. Simultaneously, the expert searches the abbreviation/acronym on a web browser which will show web pages related to the product as results. The expert has to manually identify the right product page and read the product specification to identify the product taxonomy. Hence, conventional methods involve a lot of manual time and effort to identify the right product taxonomy from a given product abbreviation. Attempts have been made to automate the process of taxonomy identification using machine learning and natural language processing techniques.

### SUMMARY

Embodiments of the present disclosure present technological improvements as solutions to one or more of the above-mentioned technical problems recognized by the inventors in conventional systems. For example, in one embodiment, a method for identification of product taxonomy from product abbreviation is provided. The method includes obtaining a product abbreviation and predicting a brand name using a Large Language Model (LLM) based on the product abbreviation and a brand list. The brand list comprises a plurality of brand names extracted from a brand acronym dictionary. Further, the method includes generating a plurality of expansions of the product abbreviation in accordance with the predicted brand name using an acronym expansion dictionary and determining a relevant expansion from among the plurality of expansions of the product abbreviation using the LLM. The method further includes applying web scraping and web search technique on the predicted relevant expansion to obtain associated top k matches of a supergroup, a product group and module of the predicted relevant expansion. Furthermore, the method includes predicting a product taxonomy of the determined relevant expansions based on the associated top k matches using a LLM augmented taxonomy classification by Retrieval Augmented Generation (RAG) .

In another aspect, a system for identification of product taxonomy from product abbreviation is provided. The system includes: a memory storing instructions; one or more communication interfaces; and one or more hardware processors coupled to the memory via the one or more communication interfaces, wherein the one or more hardware processors are configured by the instructions to obtain a product abbreviation and predict a brand name using a Large Language Model (LLM) based on the product abbreviation and a brand list. The brand list comprises a plurality of brand names extracted from a brand acronym dictionary. Further, the one or more hardware processors are configured by the instructions to generate a plurality of expansions of the product abbreviation in accordance with the predicted brand name using an acronym expansion dictionary and determine a relevant expansion from among the plurality of expansions of the product abbreviation using the LLM. The one or more hardware processors are configured by the instructions to further apply web scraping and web search technique on the predicted relevant expansion to obtain associated top k matches of a supergroup, a product group and module of the predicted relevant expansion. Furthermore, the one or more hardware processors are configured by the instructions to predict a product taxonomy of the determined relevant expansions based on the associated top k matches using a LLM augmented taxonomy classification by Retrieval Augmented Generation (RAG).

In yet another aspect, there are provided one or more non-transitory machine-readable information storage mediums comprising one or more instructions which when executed by one or more hardware processors cause a method for identification of product taxonomy from product abbreviation. The method includes obtaining a product abbreviation and predicting a brand name using a Large Language Model (LLM) based on the product abbreviation and a brand list. The brand list comprises a plurality of brand names extracted from a brand acronym dictionary. Further, the method includes generating a plurality of expansions of the product abbreviation in accordance with the predicted brand name using an acronym expansion dictionary and determining a relevant expansion from among the plurality of expansions of the product abbreviation using the LLM. The method further includes applying web scraping and web search technique on the predicted relevant expansion to obtain associated top k matches of a supergroup, a product group and module of the predicted relevant expansion. Furthermore, the method includes predicting a product taxonomy of the determined relevant expansions based on the associated top k matches using a LLM augmented taxonomy classification by Retrieval Augmented Generation (RAG).

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for identification of product taxonomy from product abbreviation, according to some embodiments of the present disclosure.
FIG. 2 is a flow diagram illustrating a method for identification of product taxonomy from product abbreviation, according to some embodiments of the present disclosure.
FIG. 3 illustrates an example implementation of method of FIG. 2, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As used herein the terms 'item', 'items', 'product', 'products' are interchangeably used throughout the detailed description and mean an object from a particular brand. The terms 'abbreviation', 'acronym', 'short form' are interchangeably used throughout the detailed description and refer to a shortened form of a product name. It starts with a brand name followed by one or more hierarchical levels of descriptions comprising the product taxonomy.

Identifying product taxonomy from a product abbreviation is currently performed manually and takes time and effort. Embodiments of present disclosure provide a method and system for identifying product taxonomy from product abbreviation. The method first obtains a product abbreviation and predicts a brand name from the obtained product abbreviation using a Large Language Model (LLM) and a brand list. Then, possible expansions of the abbreviation are generated in accordance with the predicted brand name using an acronym expansion dictionary. Among the generated possible expansions, the relevant one is identified using the LLM. Later, web scraping and web search techniques may be applied on the relevant expansion to obtain associated top k matches of a supergroup, a product group and module of the predicted relevant expansion. Finally, product taxonomy is predicted based on the top k matches using a LLM augmented taxonomy classification using Retrieval Augmented Generation (RAG). It has been experimentally observed that predicting/filtering brand name(s) first reduces search space of expansions thereby reducing time taken for taxonomy identification by at least 30-40%.

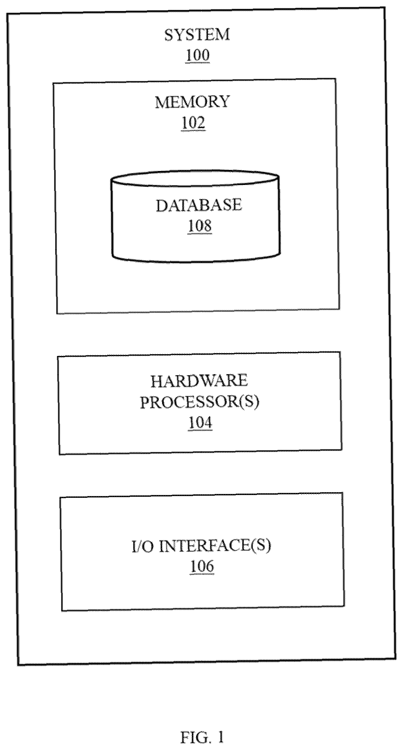

Referring now to the drawings, and more particularly to FIGS. 1 to 3, where similar reference characters denote corresponding features consistently throughout the figures, there are shown preferred embodiments, and these embodiments are described in the context of the following exemplary system and/or method.

FIG. 1 illustrates an exemplary block diagram of a system for identification of product taxonomy from product abbreviation, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

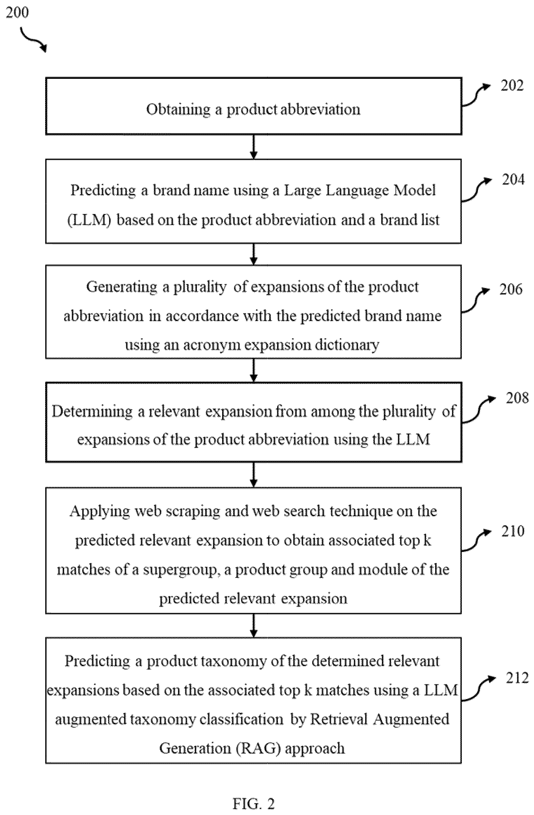

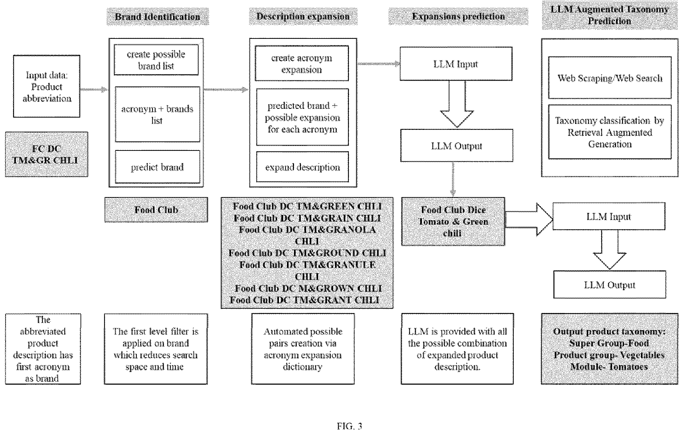

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagrams depicted in FIGS. 2 and 3 for identification of product taxonomy from product abbreviation.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the steps of flow diagram depicted in FIG. 2 and an example illustrated in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2 is a flow diagram illustrating a method 200 for identification of product taxonomy from product abbreviation, according to some embodiments of the present disclosure. At step 202, the one or more hardware processors 104 are configured to obtain a product abbreviation. The product abbreviation can be obtained from various sources such as i) Optical Character Recognition (OCR) techniques applied to extract product abbreviation from product receipts through multiple channels in the market, ii) available databases of products, iii) Application Programming Interfaces (APIs), iv) user input, v) scanning barcode on a product and the like. In the example illustrated in FIG. 3, FC DC TM&GR CHLI is the product acronym. Further, at step 204 of the method 200, the one or more hardware processors 104 are configured to predict a brand name using a Large Language Model (LLM) based on the product abbreviation and a brand list. The brand list may comprise of a plurality of brand names extracted from a brand acronym dictionary. Few example acronyms and their brand names from the brand list are fed into the LLM to predict the right brand name for the given product abbreviation. In the example illustrated in FIG. 3, Food Club is the brand name predicted for the given acronym.

Once the brand name is identified/predicted, at step 206 of the method 200, the one or more hardware processors 104 are configured to generate a plurality of expansions of the product abbreviation in accordance with the predicted brand name using an acronym expansion dictionary. The acronym expansion dictionary contains the expansions mapped to its corresponding abbreviation and is created based on historical data. After filtering the brand in step 204, all possible combination of acronyms expansion are generated. In the example illustrated in FIG. 3, the plurality of expansions generated are: Food Club DC TM&GREEN CHLI, Food Club DC TM&GRAIN CHLI, Food Club DC TM&GRANOLA CHLI, Food Club DC TM&GROUND CHLI, Food Club DC TM&GRANULE CHLI, Food Club DC TM&GROWN CHLI, Food Club DC TM&GRANT CHLI. Further, at step 208, the one or more hardware processors 104 are configured to determine a relevant expansion from among the plurality of expansions of the product abbreviation using the LLM. In the example illustrated in FIG. 3, the relevant expansion among the plurality of expansions is 'Food Club Dice Tomato & Green chili'.

Once the relevant expansion of the product abbreviation is determined, at step 210 of the method 200, the one or more hardware processors are configured to apply web scraping and web search technique on the predicted relevant expansion to obtain associated top k matches of a supergroup, a product group and module of the predicted relevant expansion. Finally at step 212 of the method 200, the one or more hardware processors are configured to predict a product taxonomy of the determined relevant expansion based on the associated top k matches using a LLM augmented taxonomy classification using Retrieval Augmented Generation (RAG) . The product taxonomy may comprise super group, product group and module associated with the product abbreviation. In the example illustrated in FIG. 3, the product taxonomy is predicted as: 'Super group - Food; Product group - Vegetables; Module - Tomatoes'.

### EXPERIMENTS AND RESULTS

The method 200 was experimented with different product abbreviations. Tables 1A-1C, collectively referred as table 1, illustrates results of the experiments. Table 1A shows obtained product abbreviations, actual brand name of the product and the brand name predicted using method 200. Table 1B shows the plurality of expansions (alternatively referred as expanded description options) of product abbreviations fed into the LLM, actual relevant expansions and the predicted relevant expansions of the product abbreviations illustrated in table 1A. Table 1C illustrates the actual and predicted product taxonomy of the product abbreviations illustrated in table 1A. The product taxonomy includes Super Group (SG), Product Group (PG) and module.

**Table 1A**

| **Product ID** | **Product abbreviation** | **Actual brand name** | **Predicted brand name** |
|---|---|---|---|
| 1. | SH NAILGRWTH | SALLY HANSEN (COTY US LLC) | SALLY HANSEN NAILGROWTH MIRACLE (COTY US LLC) |
| 2. | OBRO ORG HABANER 5 | O'BROTHER THAT'S HOT! (O'BROTHERS ORGANICS) | O'BROTHER THAT'S HOT! (O'BROTHERS ORGANICS) |
| 3. | FC DC TM&GR CHLI | FOOD CLUB (TOPCO ASSOCIATES LLC.) | FOOD CLUB (TOPCO ASSOCIATES LLC.) |
| 4. | FE PREMIUM ROMAINEPC | FRESH EXPRESS (FRESH EXPRESS CO INC) | FRESH EXPRESS (FRESH EXPRESS CO INC) |
| 5. | FE SPRING MIX | FRESH EXPRESS (FRESH EXPRESS CO INC) | FRESH EXPRESS (FRESH EXPRESS CO INC) |
| 6. | JC ORG COFFEE W | BRAND DETAIL UNKNOWN | N/A |
| 7. | K MWHIP 15 | MIRACLE WHIP (KRAFT FOODS, INC.) | MIRACLE WHIP (KRAFT FOODS, INC.) |
| 8. | LA COLOMBE LATTE | LA COLOMBE (LA COLOMBE TORREFACTION INC) | LA COLOMBE (LA COLOMBE TORREFACTION INC) |
| 9. | LACROIX PASSIONFRU | LA CROIX (LA CROIX BEVERAGE COMPANY) | LA CROIX (LA CROIX BEVERAGE COMPANY) |

**Table 1B**

| **Product ID** | **Expansions fed into LLM** | **Actual relevant expansion** | **Predicted relevant expansion** |
|---|---|---|---|
| 1. | SALLY HANSEN NAILGROWTH | SALLY HANSEN NAILGROWTH | SALLY HANSEN NAILGROWTH |
| 2. | O BROTHERS ORGANIC HABANER 5, O BROTHERS ORANGE HABANER 5, O BROTHERS ORIGINAL HABANER 5, O BROTHERS ORGANIZE HABANER 5 | O BROTHERS ORGANIC HABANERO 5 | O BROTHERS ORGANIC HABANER 5 |
| 3. | Food Club DC TM&GREEN CHLI, Food Club DC TM&GRAIN CHLI, Food Club DC TM&GRANOLA CHLI, Food Club DC TM&GROUND CHLI, Food Club DC TM&GRANULE CHLI, Food Club DC TM&GROWN CHLI, Food Club DC TM&GRANT CHLI | Food Club Dice Tomato & Green chili | Food Club DC TM&GREEN CHILLI |
| 4. | Fresh Express PREMIUM ROMAINEPC | Fresh Express PREMIUM ROMAINE Pack | Fresh Express PREMIUM ROMAINEPC |
| 5. | Fresh Express SPRING MIX | Fresh Express SPRING MIX | Fresh Express SPRING MIX |
| 6. | JC ORGANIC COFFEE W, JC ORIGINAL COFFEE W, JC ORANGE COFFEE W, JC ORGANIZE COFFEE W | JC ORGANIC COFFEE W | JC ORGANIC COFFEE W |
| 7. | kraft miracle whip 15 ounces, kraft miracle whip dips, kraft miracle whip meat condiments, kraft miracle whip mayonnaise, kraft miracle whip spreads | KRAFT MIRACLE WHIP 15 OUNCE | KRAFT MIRACLE WHIP 15 OUNCE |
| 8. | LA COLOMBE LATTE | LA COLOMBE LATTE | LA COLOMBE LATTE |
| 9. | LACROIX PASSIONFRU | LACROIX PASSION Fruit | LACROIX PASSIONFRU |

**Table 1C**

| **Produ ct ID** | **Actual SG** | **Actual PG** | **Actual MODULE** | **Predicted SG** | **Predicted PG** | **Predicted MODULE** |
|---|---|---|---|---|---|---|
| 1. | HEALTH & BEAUTY CARE | COSMETICS & NAIL GROOMING | NAIL TREATMENTS | HEALTH & BEAUTY CARE | COSMETICS & NAIL GROOMING | NAIL TREATMENTS |
| 2. | FOOD | CONDIMEN TS | HOT SAUCE/CHIL I CONDIMEN TS | FOOD | CONDIMEN TS | HOT SAUCE/CHIL I CONDIMEN TS |
| 3. | FOOD | VEGETABLE S | TOMATOES | FOOD | VEGETABLE S | TOMATOES |
| 4. | FOOD | VEGETABLE S | PREPACKAGED SALADS | FOOD | VEGETABLE S | PREPACKAGED SALADS |
| 5. | FOOD | VEGETABLE S | PREPACKAGED SALADS | FOOD | VEGETABLE S | PREPACKAGED SALADS |
| 6. | FOOD | COFFEE | RTD & PACKAGED COFFEE | FOOD | COFFEE | RTD & PACKAGED COFFEE |
| 7. | FOOD | CONDIMEN TS | SANDWICH DRESSING | FOOD | CONDIMEN TS | SANDWICH DRESSING |
| 8. | FOOD | COFFEE | RTD & PACKAGED COFFEE | FOOD | COFFEE | RTD & PACKAGED COFFEE |
| 9. | FOOD | BEVERAGES | SPARKLING WATER | FOOD | BEVERAGES | SPARKLING WATER |

It can be observed from table 1 that most of the predictions are same as the actual values. Hence, the method 200 makes accurate prediction of product taxonomy. Table 2 illustrates results of experiments performed on a dataset of product abbreviations. The dataset is highly confidential and strictly does not allow to be disclosed in public. This dataset provides a file containing abbreviations as input, bar code, actual expanded description, and taxonomy comprising super group, product group, module, brand. The dataset also contains brand-acronym dictionary, acronym-expansion dictionary and a taxonomy file with hierarchy for super group, product group, module, brand. In table 2, 'complete positive' indicates percentage of exact match of product taxonomy predicted by method 200 with expected output (i.e., the true value available in the dataset), 'partial positive' indicates percentage of partial match of product taxonomy predicted by method 200 with expected output, and 'complete negative' indicates percentage of predictions that do not match with expected output (since the data contains OCR errors, missing acronym expansion etc.).

**Table 2**

| | |
|---|---|
| Complete Positive | 61.11% |
| Partial Positive | 8.89% |
| Complete Negative | 30.00% |
| **Accuracy** | 70% |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method comprising:
obtaining (202), via one or more hardware processors, a product abbreviation;
predicting (204), via the one or more hardware processors, a brand name using a Large Language Model (LLM) based on the product abbreviation and a brand list, wherein the brand list comprises a plurality of brand names extracted from a brand acronym dictionary;
generating (206), via the one or more hardware processors, a plurality of expansions of the product abbreviation in accordance with the predicted brand name using an acronym expansion dictionary;
determining (208), via the one or more hardware processors, a relevant expansion from among the plurality of expansions of the product abbreviation using the LLM;
applying (210), via the one or more hardware processors, web scraping and web search technique on the predicted relevant expansion to obtain associated top k matches of a supergroup, a product group and a module of the predicted relevant expansion; and
predicting (212), via the one or more hardware processors, a product taxonomy of the determined relevant expansion based on the associated top k matches using a LLM augmented taxonomy classification by Retrieval Augmented Generation (RAG).

2. The method as claimed in claim 1, wherein each of the plurality of expansions of the product abbreviation comprises the brand name followed by one or more hierarchical levels of descriptions comprising the product taxonomy with the super group, the product group and the module associated with the product abbreviation.

3. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
obtain a product abbreviation;
predict a brand name using a Large Language Model (LLM) based on the product abbreviation and a brand list, wherein the brand list comprises a plurality of brand names extracted from a brand acronym dictionary;
generate a plurality of expansions of the product abbreviation in accordance with the predicted brand name using an acronym expansion dictionary;
determine a relevant expansion from among the plurality of expansions of the product abbreviation using the LLM;
apply web scraping and web search technique on the predicted relevant expansion to obtain associated top k matches of a supergroup, a product group and module of the predicted relevant expansion; and
predict a product taxonomy of the determined relevant expansion based on the associated top k matches using a LLM augmented taxonomy classification by Retrieval Augmented Generation (RAG).

4. The system as claimed in claim 3, wherein each of the plurality of expansions of the product abbreviation comprises the brand name followed by one or more hierarchical levels of descriptions comprising the product taxonomy with the super group, the product group and the module associated with the product abbreviation.

5. One or more non-transitory machine-readable information storage mediums comprising one or more instructions which when executed by one or more hardware processors cause:
obtaining a product abbreviation;
predicting a brand name using a Large Language Model (LLM) based on the product abbreviation and a brand list, wherein the brand list comprises a plurality of brand names extracted from a brand acronym dictionary;
generating a plurality of expansions of the product abbreviation in accordance with the predicted brand name using an acronym expansion dictionary;
determining a relevant expansion from among the plurality of expansions of the product abbreviation using the LLM;
applying web scraping and web search technique on the predicted relevant expansion to obtain associated top k matches of a supergroup, a product group and a module of the predicted relevant expansion; and
predicting a product taxonomy of the determined relevant expansion based on the associated top k matches using a LLM augmented taxonomy classification by Retrieval Augmented Generation (RAG).

6. The one or more non-transitory machine-readable information storage mediums as claimed in claim 5, wherein the one or more instructions which when executed by the one or more hardware processors further cause the product taxonomy with the super group, the product group and the module associated with the product abbreviation.
